# EUROPÄISCHE PATENTSCHRIFT

(11) **EP 1 673 845 B1**
(45) Veröffentlichungstag und Bekanntmachung des Hinweises auf die Patenterteilung: **11.05.2011**
(21) Anmeldenummer: 04786767.6
(22) Anmeldetag: 08.09.2004
(51) Int. Cl.: H02H 9/00

(54) **SCHALTUNGSANORDNUNG ZUR EINSCHALTSTROMBEGRENZUNG FÜR AN EINEN BAUGRUPPENTRÄGER ANGESCHLOSSENE EKTRONIKMODULE**
CIRCUIT ARRANGEMENT FOR STARTUP CURRENT LIMITATION FOR ELECTRONIC MODULES CONNECTED TO A MODULE CARRIER
CIRCUIT DE LIMITATION DU COURANT DE DEMARRAGE DESTINE A DES MODULES ELECTRONIQUES CONNECTES A UN PORTE-MODULE

(30) Priorität: 14.10.2003 DE 10349072
(43) Veröffentlichungstag der Anmeldung: 28.06.2006
(73) Patentinhaber: MSA Auer GmbH, 12059 Berlin (DE)
(72) Erfinder: LEMKE, Andreas, 12161 Berlin (DE)
(74) Vertreter: Maikowski, Michael
(86) Internationale Anmeldenummer: PCT/DE2004/002046
(87) Internationale Veröffentlichungsnummer: WO 2005/041379

(56) Entgegenhaltungen:
- DE-A1- 3 942 480
- US-A- 5 729 062
- US-A- 5 910 690

## Beschreibung

Die Erfindung betrifft eine Schaltungsanordnung zur Einschaltstrombegrenzung für an einem Baugruppenträger mit einer Mehrzahl von Steckplätzen angeschlossene Elektronikmodule.

Bei den bekannten Anordnungen zur Stromversorgung von den an einen Baugruppenträger angeschlossenen Elektronikmodulen und den mit diesen verbundenen Sensoren zur Erfassung und Auswertung von Messsignalen, beispielsweise bei einem Fernwarnsystem, tritt beim Einschalten, und zwar bedingt durch den Kaltwiderstand der Sensoren und der auf den Elektronikmodulen vorgesehenen Stromversorgungsbaugruppen, ein gegenüber dem Betriebsstrom um ein Vielfaches höherer Einschaltstromstoß auf. Bei einem voll ausgebauten System mit einer Vielzahl von Elektronikmodulen und Messköpfen hat der hohe Einschaltstromstoß eine Überlastung der Anschlussklemmen, der Leiterbahnen und der zur Stromversorgung angeschlossenen Netzteile zur Folge. Zur Vermeidung der hohen Einschaltspitzen und der damit verbundenen Überlastungen werden die den Steckplätzen des Baugruppenträgers zugeordneten Auswerteeinheiten (Elektronikmodule) und Messköpfe zur Begrenzung des Einschaltstromes zeitlich versetzt eingeschaltet.

Eine grundlegende Schaltungsanordnung zum Einstellen einer Verzögerungszeit ist aus U. Tietze, Ch. Schenk: "Halbleiterschaltungstechnik", Berlin: Springer-Verlag, 9. Auflage, 1989, S. 185, 187-189 bekannt. Dabei wird die Verzögerungszeit über einen einem Komparator vorgeschalteten Widerstand und einen Ladekondensator eingestellt. In der DE 102 00 637 C1 ist eine Einschaltstrombegrenzung für eine Klimaanlage beschrieben, bei der einzelne Komponenten zeitversetzt eingeschaltet werden. Der jeweilige Zeitversatz wird dabei in einer zentralen Steuereinheit berechnet.

Die DE 42 15 676 A1 beschreibt eine Schaltungsanordnung zur Einschaltstrombegrenzung in einer elektronischen Baugruppe, bei der die Strombegrenzung durch einen steuerbaren Serienwiderstand erzielt wird. Der steuerbare Serienwiderstand ist dabei ein Feldeffekttransistor, welcher von einer Steuereinheit über ein RC-Glied zeitverzögert von hochohmig nach niederohmig gesteuert wird.

Aus der DE 39 37 621 C2 ist ferner eine physikalisch abfragbare Kennzeichnung von Steckplätzen eines Rahmens einer Fernsprechanlage in Form eines Kennzeichnungsbusses bekannt. Bei dem Kennzeichnungsbus handelt es sich um Leitungsverbindungen, die logische Potentiale führen und gemeinsam als Datenwort auswertbar sind, so dass durch vorbestimmte Verbindungen eine kennzeichnende Adresse vergeben wird.

Eine weitere Schaltungsanordnung gemäss dem Oberbegriff des Anspruchs 1 ist aus US 5 910 690 bekannt.

Die bei solchen Anordnungen erforderlichen Einstellelemente wie Potentiometer, Steckbrücken und Transistoren, die zur Einstellung oder Berechnung der Einschaltverzögerung erforderlichen mikrokontrollergesteuerten Baugruppen und die notwendige Verdrahtung sind konstruktiv und apparativ aufwendig und letztlich mit hohen Kosten verbunden.

Der Erfindung liegt daher die Aufgabe zugrunde, eine Schaltungsanordnung zur zeitlich verzögerten Zuschaltung von an einem Baugruppenträger angeschlossenen Elektronikmodulen anzugeben, die mit einem verminderten Steuerungs- und Konstruktionsaufwand und damit kostengünstig hergestellt werden kann.

Erfindungsgemäß wird die Aufgabe mit einer gemäß den Merkmalen des Patentanspruchs 1 ausgebildeten Schaltungsanordnung gelöst. Vorteilhafte Weiterbildungen und Ausgestaltungen der Erfindung ergeben sich aus den Unteransprüchen.

Der Kern der Erfindung besteht in einer jeder Steckplatzposition zugeordneten codierten Einschaltverzögerung, die durch an das Elektronikmodul angeschlossene Kondensatoren unterschiedlicher Kapazität bestimmt wird, indem die Kondensatoren über in den jeweiligen Steckplatz in unterschiedlicher Kombination integrierte Anschlüsse einem Komparator vorgeschaltet sind. Die jeweils unterschiedliche Summe der Kapazitäten und die daraus resultierende unterschiedliche Zeitspanne bis zum Erreichen einer an einem Komparator anliegenden Referenzspannung führt zu einem Ausgangssignal des Komparators zum entsprechend dem jeweiligen Zeitablauf zeitverzögerten Einschalten des mit dem jeweiligen Steckplatz verbundenen Elektronikmoduls und daran angeschlossener Sensoren.

Die dem Elektronikmodul zugeordnete Komparatorschaltung mit den dieser zugeordneten Ladekondensatoren sowie die in die Steckplätze in unterschiedlicher Kombination integrierten Anschlüsse für die Ladekondensatoren können mit geringem Schaltungsaufwand kostengünstig erstellt werden. Gegenüber den bekannten Lösungen zur Einschaltverzögerung entfallen sowohl die Maßnahmen für eine modulbezogenen Einstellung als auch die zusätzliche Verwendung einer mikrokontrollergesteuerten Baugruppe.

Entsprechend der Auswahl der in jeder Komparatorschaltung eingebundenen Ladekondensatoren kann eine Vielzahl unterschiedlicher Signale zur zeitlich unterschiedlichen Zuschaltung der Elektronikmodule erzeugt werden. Beispielsweise können mit jeweils vier Kondensatoren unterschiedlicher Kapazität 16 Elektronikmodule mit 16 unterschiedlichen Zeitverzögerungen an die Betriebsspannung angeschlossen werden. Eine Überlastung der Anschlüsse und Leiterbahnen der Elektronikmodule, Sensoren und Netzteile, die durch das gleichzeitige Einschalten aller Module auftreten kann, ist dadurch ausgeschlossen.

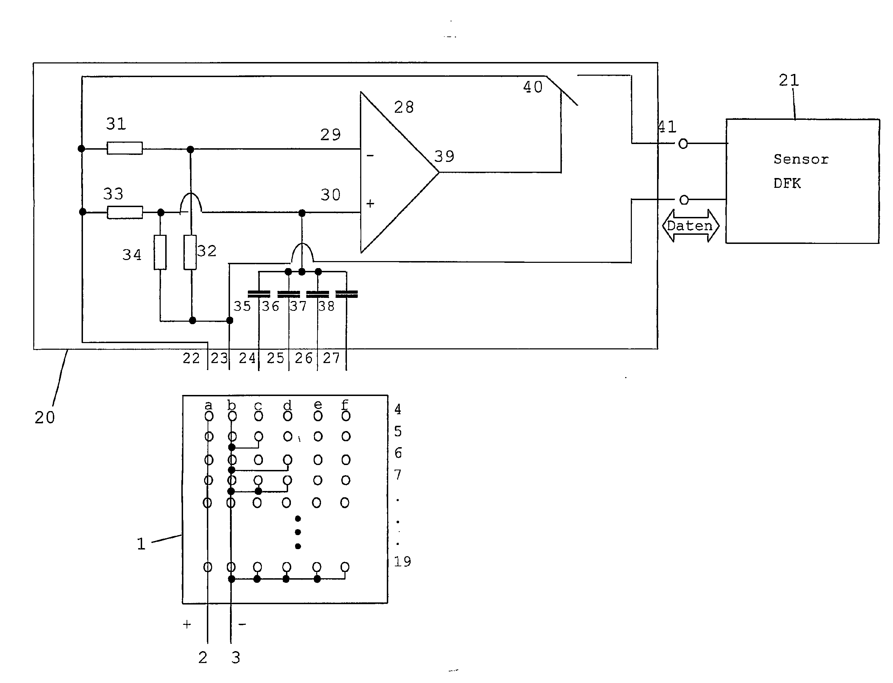

Ein Ausführungsbeispiel der Erfindung wird anhand der Zeichnung, in deren einziger Figur eine Anordnung zur Einschaltstrombegrenzung dargestellt ist, erläutert.

Eine erfindungsgemäße Anordnung besteht aus einem Baugruppenträger 1 mit Spannungsanschlüssen 2 und 3 für eine Betriebsspannung und Steckplätzen 4 bis 19 zum Anschließen von jeweils einem Elektronikmodul 20. Das Elektronikmodul 20 versorgt einen Sensor oder Datenfernmesskopf 21 mit der Betriebsspannung und nimmt Daten vom Sensor/Datenfernmesskopf 21 auf.

Jeder der Steckplätze 4 bis 19 besteht aus mehreren Anschlussbuchsen a bis f, beispielsweise besteht Steckplatz 4 aus Anschlüssen 4a bis 4f, Steckplatz 19 aus Anschlüssen 19a bis 19f. Der jeweilige Anschluss a ist mit der positiven Betriebsspannung verbunden, der jeweilige Anschluss b ist mit der negativen Betriebsspannung verbunden. Die jeweiligen Anschlüsse c bis f sind gemäß der folgenden Tabelle mit der negativen Betriebsspannung verbunden (0=keine Verbindung, 1=Verbindung):

| Anschluss | c | d | e | f | |
|---|---|---|---|---|---|
| Steckplatz | | | | | **Summe / Verzögerungsfaktor** |
| 4 | 0 | 0 | 0 | 0 | 0 |
| 5 | 1 | 0 | 0 | 0 | 1 |
| 6 | 0 | 1 | 0 | 0 | 2,2 |
| 7 | 1 | 1 | 0 | 0 | 3,2 |
| 8 | 0 | 0 | 1 | 0 | 4,7 |
| 9 | 1 | 0 | 1 | 0 | 5,7 |
| 10 | 0 | 1 | 1 | 0 | 6,9 |
| 11 | 1 | 1 | 1 | 0 | 7,9 |
| 12 | 0 | 0 | 0 | 1 | 10 |
| 13 | 1 | 0 | 0 | 1 | 11 |
| 14 | 0 | 1 | 0 | 1 | 12,2 |
| 15 | 1 | 1 | 0 | 1 | 13,2 |
| 16 | 0 | 0 | 1 | 1 | 14,7 |
| 17 | 1 | 0 | 1 | 1 | 15,7 |
| 18 | 0 | 1 | 1 | 1 | 16,9 |
| 19 | 1 | 1 | 1 | 1 | 17,9 |

Ein Elektronikmodul 20 weist Anschlüsse 22 bis 27 auf. Jeder der Steckplätze 4 bis 19 besteht entsprechend aus Anschlussbuchsen 4a-4f bis 19a-19f. Wird beispielsweise ein Elektronikmodul 20 an Steckplatz 4 angeschlossen, so sind die Anschlüsse 22 bis 27 mit den Buchsen 4a bis 4f verbunden, wird beispielsweise ein Elektronikmodul 20 an Steckplatz 19 angeschlossen, so sind die Anschlüsse 22 bis 27 mit den Buchsen 19a bis 19f verbunden.

Im Elektronikmodul 20 wird eine Schaltungsanordnung zur Versorgung eines Sensors 21 verwendet. Die Schaltungsanordnung besteht aus einem Komparator 28 mit positivem Eingang 29 und negativem Eingang 30. Am negativen Komparatoreingang wird über Widerstände 31 und 32 eine Bezugspannung angelegt. Am positiven Komparatoreingang 29 wird über Widerstände 33 und 34 und über Kondensatoren 35, 36, 37 und 38 mit jeweils unterschiedlicher Kapazität die Betriebsspannung angelegt. Durch die Kondensatoren 35, 36, 37 und 38 steigt die Spannung am positiven Komparatoreingang innerhalb einer Zeitspanne t1 an. Wenn die Spannung am positiven Komparatoreingang 29 die Spannung am negativen Komparatoreingang 30 übersteigt, liegt am Komparatorausgang 39 ein Signal, welches einen Schalter 40 betätigt. Dadurch wird die positive Betriebsspannung am Spannungsanschluss 2 auf den positiven Ausgang 41 des Elektronikmoduls geschaltet, und der Sensor 21 erhält dadurch die Versorgungsspannung.

Die in der Tabelle beschriebene Anschlussbelegung der einzelnen Steckplätze 4 bis 19 führt beim Anschliessen eines Elektronikmoduls dazu, dass für jedes angeschlossene Modul eine dem jeweiligen Steckplatz entsprechende Kombination der Kondensatoren 35, 36, 37 und 38 vor den positiven Komparatoreingang geschaltet ist. Diese Kombination ist für jeden der Steckplätze verschieden und führt zu einer dem Steckplatz entsprechenden Zeitkonstante t1, nach der die Spannung am positiven Komparatoreingang 29 die Spannung am negativen Komparatoreingang 30 übersteigt. Durch den Steckplatz ist für jedes Elektronikmodul 20 und den daran angeschlossenen Sensor 21 die Zeitverzögerung t1 festgelegt, nach der der Sensor seine Betriebsspannung erhält.
Bei Verwendung von vier Anschlüssen c, d, e, f und dementsprechend vier Kondensatoren 35, 36, 37, 38 mit unterschiedlichen Kapazitäten können also 16 verschiedene Verzögerungen realisiert werden. In Spalte 6 der Tabelle sind die jeweiligen Verzögerungswerte der einzelnen Steckplätze angegeben, wenn beispielsweise Kondensatoren mit Kapazitätsverhältnissen 35=1,0/36=2,2/37=4,7/38=10,0 verwendet werden.

### Bezugszeichenliste

- 1: Baugruppenträger
- 2: Positiver Spannungsanschluss an 1
- 3: Negativer Spannungsanschluss an 1
- 4 bis 19: Steckplatz für Elektronikmodul
- 20: Elektronikmodul
- 21: Sensor/Datenfernmesskopf
- 22 bis 27: Anschlüsse Elektronikmodul
- 28: Komparator
- 29: Pos. Komparatoreingang
- 30: Neg. Komparatoreingang
- 31: Widerstand für Bezugsspannung
- 32: Widerstand für Bezugsspannung
- 33: Ladewiderstand
- 34: Ladewiderstand
- 35 bis 38: Kondensatoren
- 39: Komparatorausgang
- 40: Elektronischer Schalter
- 41: Positiver Ausgang des Elektronikmoduls

## Patentansprüche

1. Schaltungsanordnung zur Einschaltstrombegrenzung für an einen Baugruppenträger (1) mit einer Mehrzahl von Steckplätzen (4 bis 19) angeschlossene Elektronikmodule (20), denen zur zeitlich verzögerten Stromversorgung über den jeweiligen Steckplatz (4 bis 19) jeweils ein Komparator (28) zugeordnet ist, an dem eine Referenzspannung anliegt und dem ein Ladekondensator vorgeschaltet ist, dessen Kapazität die Einschaltverzögerung bestimmt, indem das Überschreiten der Referenzspannung nach Ablauf der Ladezeit ein Signal zum Anlegen der Betriebsspannung an das jeweilige Elektronikmodul (20) darstellt, **dadurch gekennzeichnet, dass**
- mehrere Ladekondensatoren (35 bis 28) mit jeweils voneinander verschiedener Kapazität vorgesehen sind, die in unterschiedlicher Anzahl und Kapazität mit dem jeweiligen Steckplatz (4 bis 19) verbunden sind, und
- die Steckplätze elektrische Anschlüsse (4a,b bis 19a,b) für die Elektronikmodule (20) und mit den Ladekondensatoren (35 bis 38) verknüpfte Anschlüsse (4c-f bis 19c-f) aufweisen, die in jeweils unterschiedlicher Kombination mit den elektrischen Anschlüssen (4b bis 19b) verbunden sind.

2. Schaltungsanordnung nach Anspruch 1, **dadurch gekennzeichnet, dass** dem Komparator (28) Widerstände (31,32) zur Bereitstellung der Referenzspannung und den Ladekondensatoren (35 bis 38) Ladewiderstände (33,34) vorgeschaltet sind.

3. Schaltungsanordnung nach Anspruch 1, **dadurch gekennzeichnet, dass** das Elektronikmodul (20) eine mit Sensoren (21) verbundene Auswerteeinheit zum Erfassen und Auswerten von Messsignalen ist.

## Claims

1. Circuit arrangement for startup current limitation for electronic modules (20) connected to a module carrier (1) with a multitude of slots (4 to 19), for time-delayed power supply of the electronic modules (20) via the respective slots (4 to 19), the electronic modules (20) are each associated with a comparator (28) to which a reference voltage is applied and upstream of which a charging capacitor is provided, the capacity of the capacitor determining the startup delay, where an exceeding of the reference voltage after the charging time represents a signal for applying the operating voltage to the respective electronic module (20),
**characterized in that**,
- multiple charging capacitors (35 to 38) are provided having each different capacities, which are connected in different numbers and capacitances with the respective slots (4 to 19), and
- the slots having electrical connections (4a,b bis 19a,b) for the electronic modules (20) and having connections (4c-f to 19c-f) coupled with the charging capacitors (35 to 38), which are connected with the electrical connections (4b to 19b) each in a different combination.

2. Circuit arrangement according to claim 1, **characterized in that** resistors (31, 32) are connected upstream of the comparator (28) for providing the reference voltage and charging resistors (33, 34) are connected upstream of the charging capacitors (35 to 38).

3. Circuit arrangement according to claim 1, **characterized in that** the electronic module (20) is an evaluating unit for recording and analysing measuring signals that is connected to sensors (21).

## Revendications

1. Circuit destiné à limiter le courant de démarrage pour des modules électroniques (20) connectés à un rack (1) avec une pluralité de postes d'enfichage (4 à 19), un comparateur (28) étant affecté à chacun desdits modules pour une alimentation en courant différée via le poste d'enfichage (4 à 19) correspondant, une tension de référence étant appliquée audit comparateur et un condensateur de charge étant monté en amont de celui-ci, dont la capacité détermine le retardement de commutation en ce que le dépassement de la tension de référence à l'expiration du temps de charge représente un signal pour l'application de la tension de service au module électronique (20) correspondant, **caractérisé**
- **en ce que** plusieurs condensateurs de charge (35 à 28) sont prévus avec des capacités différenciées entre elles, lesquels sont raccordés en nombre variable et capacités différenciées chacun au poste d'enfichage (4 à 19) correspondant, et
- **en ce que** les postes d'enfichage comportent des connexions électriques (4a, b à 19a, b) pour les modules électroniques (20) et des connexions (4c-f à 19c-f) reliées aux condensateurs de charge (35 à 28), lesquelles sont intégrées suivant diverses combinaisons aux connexions électriques (4b à 19b).

2. Circuit selon la revendication 1, **caractérisé en ce que** des résistances (31, 32) sont montées en amont du comparateur (28) pour la préparation de la tension de référence, et **en ce que** des résistances de charge (33, 34) sont montées en amont des condensateurs de charge (35 à 38).

3. Circuit selon la revendication 1, **caractérisé en ce que** le module électronique (20) est une unité d'analyse reliée à des capteurs (21) pour la détection et l'évaluation de signaux de mesure.
